# EUROPEAN PATENT APPLICATION

(11) **EP 4 482 238 A1**
(43) Date of publication of application: **25.12.2024**
(21) Application number: 23795577.8
(22) Date of filing: 27.04.2023
(51) Int. Cl.: H04W 72/12

(54) **INFORMATION TRANSMISSION METHOD AND APPARATUS**

(30) Priority: 28.04.2022 CN 202210471396
(71) Applicant: Huawei Technologies Co., Ltd., Shenzhen, Guangdong 518129 (CN)
(72) Inventor: FAN, Bo, Shenzhen, Guangdong 518129 (CN); LI, Fang, Shenzhen, Guangdong 518129 (CN); CHEN, Lei, Shenzhen, Guangdong 518129 (CN)
(74) Representative: Isarpatent
(86) International application number: PCT/CN2023/091343
(87) International publication number: WO 2023/208145

(57) **Abstract**

This application provides an information transmission method and an apparatus, and may be applied to the communication field. The method includes: A terminal device measures reference signal resources in X resource sets, to determine M resource groups, where X is an integer greater than 1, and M is an integer greater than 0; and the terminal device sends first indication information and second indication information to a network device, where the first indication information indicates the M resource groups, each of the M resource groups includes X reference signal resources, and the X reference signal resources in the resource group belong to different resource sets in the X resource sets; and the second indication information indicates panel information of N of the M resource groups, where N is an integer less than or equal to M. According to the foregoing method, the terminal device reports panel information of each resource group, so that the network device can efficiently schedule the terminal device based on the panel information.

## Description

### CROSS-REFERENCE TO RELATED APPLICATIONS

This application claims priority to Chinese Patent Application No. 202210471396.2, filed with the China National Intellectual Property Administration on April 28, 2022 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

In a 5th generation (5th generation, 5G) mobile communication system, high-frequency communication may be used, that is, a high-band signal is used for data transmission. A main problem of the high-frequency communication is that signal energy sharply decreases with a transmission distance, resulting in a short signal transmission distance. To resolve this problem, an analog beam technology is used in the high-frequency communication. By performing weighted processing on an antenna array, the signal energy is concentrated in a small angle range, to form a signal similar to a light beam (referred to as an analog beam, a beam for short), thereby increasing the transmission distance. The beam is used for transmission between a network device and a terminal device.

A specific beam needs to be used for uplink and downlink data transmission between the network device and the terminal device. A specific beam to be used for the transmission is determined by using a beam measurement process. In a multi-station transmission mode, the network device may configure two resource sets for the terminal device, which respectively correspond to two different transmission and reception points (transmission and reception points, TRPs). Each resource set includes one or more resources, and the network device sends a signal corresponding to each resource by using one beam, so that the terminal device measures beam quality of a corresponding TRP. The terminal device performs paired reporting on resources in the two resource sets, that is, selects one resource with good quality from each resource set to form a pair and reports the pair to the network device. The terminal device may report one or more such resource groups (or referred to as beam groups) and reference signal received power (reference signal received power, RSRP) of each resource in each resource group.

According to the foregoing method, the network device may schedule, based on the resource groups reported by the terminal device, the terminal device to perform downlink transmission, but cannot schedule the terminal device to perform uplink transmission. Therefore, how the network device determines, in a measurement process, to schedule the terminal device to perform uplink transmission is an urgent problem to be resolved.

### SUMMARY

This application provides an information transmission method and an apparatus, to resolve a problem of how a terminal device reports information in a measurement process, so that a network device determines how to schedule the terminal device to perform uplink transmission.

According to a first aspect, this application provides an information transmission method. The method is for implementing a function on a terminal device side. For example, the method may be applied to a terminal device or a chip in the terminal device. A specific execution body of the method is not limited in this embodiment of this application. Optionally, the method may be jointly implemented by a plurality of functional modules on the terminal device side, and a method performed by each functional module also falls within the protection scope of this application. An example in which the method is applied to the terminal device is used. In the method, the terminal device measures reference signal resources in X resource sets, to determine M resource groups, where X is an integer greater than 1, and M is an integer greater than 0; and each resource set includes at least M reference signal resources, each resource group includes X reference signal resources, and the X reference signal resources in each resource group belong to different resource sets in the X resource sets; and the terminal device sends first indication information and second indication information to a network device, where the first indication information indicates the M resource groups, the second indication information includes panel information respectively corresponding to N of the M resource groups, and N is an integer less than or equal to M.

According to the foregoing method, the terminal device reports the panel information of the resource group, so that the network device can determine information related to uplink transmission based on the panel information, and efficiently schedule the terminal device.

In a possible implementation, each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

The foregoing panel information may indicate the network device to determine the information such as whether the panels corresponding to the X reference signal resources in the resource group are the same, to perform multi-panel scheduling on the terminal device and improve scheduling efficiency.

In a possible implementation, the panel information further indicates a resource group identifier of the resource group corresponding to the panel information.

In a possible implementation, the N resource groups are preset N resource groups of the M resource groups.

In a possible implementation, before the terminal device measures reference signal resources in X resource sets, the method further includes: The terminal device sends L1 first parameters to the network device, where each first parameter indicates one maximum quantity of transmit ports, different first parameters indicate different maximum quantities of transmit ports, and L1 is an integer greater than 0.

In a possible implementation, X=2, each resource group includes a first reference signal resource and a second reference signal resource, and the panel information includes at least one of the following information: first information, second information, and third information.

The first information indicates one of the L1 first parameters, and a maximum quantity of transmit ports indicated by the first parameter corresponding to the first information is a maximum quantity of transmit ports of a panel corresponding to the first reference signal resource.

The second information indicates one of the L1 first parameters, and a maximum quantity of transmit ports indicated by the first parameter corresponding to the second information is a maximum quantity of transmit ports of a panel corresponding to the second reference signal resource.

The third information indicates whether the panels corresponding to the X reference signal resources in the resource group corresponding to the panel information are the same.

In a possible implementation, the method further includes: The terminal device sends L2 second parameters to the network device, where each second parameter indicates one or more maximum quantities of transmit ports, and L2 is an integer greater than 0.

In a possible implementation, the method further includes: The terminal device receives L2 second parameters from the network device, where each second parameter indicates one or more maximum quantities of transmit ports, L2 is an integer greater than 0, and the L2 second parameters are determined based on the L1 first parameters; and if the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

In a possible implementation, X=2, the resource group corresponding to the panel information includes a first reference signal resource and a second reference signal resource, and the panel information indicates one of the L2 second parameters.

When the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, where the first reference signal resource and the second reference signal resource in the resource group corresponding to the panel information correspond to a same panel.

When the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, where the first reference signal resource and the second reference signal resource in the resource group corresponding to the panel information correspond to different panels.

In a possible implementation, each second parameter further indicates a quantity of panels corresponding to the one or more maximum quantities of transmit ports, and the method further includes: The quantity of panels corresponding to the X reference signal resources in the resource group corresponding to the panel information is equal to a quantity of panels indicated by the second parameter indicated by the panel information.

In a possible implementation, each resource group includes two reference signal resources. If the two reference signal resources in the resource group corresponding to the panel information correspond to different panels, the panel information further indicates whether the two panels corresponding to the two reference signal resources in the resource group corresponding to the panel information can be used for uplink multi-panel simultaneous transmission.

In a possible implementation, each resource group includes two reference signal resources, and the panel information further indicates whether panels, terminal receive beams, or beams corresponding to the two reference signal resources in the resource group corresponding to the panel information can be used for uplink multi-panel simultaneous transmission, uplink simultaneous transmission, or uplink multi-beam simultaneous transmission.

In a possible implementation, the method further includes: The terminal device receives configuration information from the network device, where the configuration information indicates one or more of the following information: the X resource sets, a value of M, and a value of N.

According to a second aspect, this application provides an information transmission method. The method is for implementing a function on a network device side, for example, may be applied to a network device or a chip in the network device. A specific execution body of the method is not limited in this embodiment of this application. Optionally, the method may be jointly implemented by a plurality of functional modules on the network device side through interaction, and a method performed by each functional module also falls within the protection scope of this application. An example in which the method is applied to the network device is used. In the method, the network device sends reference signal resources in X resource sets to a terminal device, where the X resource sets are for determining M resource groups, X is an integer greater than 1, and M is an integer greater than 0; and each resource set includes at least M reference signal resources, each resource group includes X reference signal resources, and the X reference signal resources in each resource group belong to different resource sets in the X resource sets; and the network device receives first indication information and second indication information from the terminal device, where the first indication information indicates the M resource groups, the second indication information includes panel information respectively corresponding to N of the M resource groups, and N is an integer less than or equal to M.

In a possible implementation, the second indication information includes N pieces of panel information, and each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

In a possible implementation, the panel information further indicates a resource group identifier of the resource group corresponding to the panel information.

In a possible implementation, the N resource groups are preset N resource groups of the M resource groups.

In a possible implementation, before the network device sends reference signal resources in X resource sets to a terminal device, the method further includes: The network device receives L1 first parameters from the terminal device, where each first parameter indicates one maximum quantity of transmit ports, different first parameters indicate different maximum quantities of transmit ports, and L1 is an integer greater than 0.

In a possible implementation, the resource group corresponding to the panel information includes a first reference signal resource and a second reference signal resource, and the panel information includes at least one of the following information: first information, second information, and third information; the first information indicates one of the L1 first parameters, and a maximum quantity of transmit ports indicated by the first parameter corresponding to the first information is a maximum quantity of transmit ports of a panel corresponding to the first reference signal resource; the second information indicates one of the L1 first parameters, and a maximum quantity of transmit ports indicated by the first parameter corresponding to the second information is a maximum quantity of transmit ports of a panel corresponding to the second reference signal resource; and the third information indicates whether the panels corresponding to the X reference signal resources in the resource group corresponding to the panel information are the same.

In a possible implementation, the method further includes: The network device receives L2 second parameters from the terminal device, where each second parameter indicates one or more maximum quantities of transmit ports, and L2 is an integer greater than 0.

In a possible implementation, the method further includes: The network device sends L2 second parameters to the terminal device, where each second parameter indicates one or more maximum quantities of transmit ports, L2 is an integer greater than 0, and the L2 second parameters are determined based on the L1 first parameters; and the L2 second parameters are determined based on the L1 first parameters.

If the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

In a possible implementation, X=2, the resource group corresponding to the panel information includes a first reference signal resource and a second reference signal resource, and the panel information indicates one of the L2 second parameters.

When the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, where the first reference signal resource and the second reference signal resource in the resource group corresponding to the panel information correspond to a same panel.

When the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, where the first reference signal resource and the second reference signal resource in the resource group corresponding to the panel information correspond to different panels.

In a possible implementation, each second parameter further indicates a quantity of panels corresponding to the one or more maximum quantities of transmit ports, and the method further includes: The quantity of panels corresponding to the X reference signal resources in the resource group corresponding to the panel information is equal to a quantity of panels indicated by the second parameter indicated by the panel information.

In a possible implementation, each resource group includes two reference signal resources. If the two reference signal resources in the resource group corresponding to the panel information correspond to different panels, the panel information further indicates whether the two panels corresponding to the two reference signal resources in the resource group corresponding to the panel information can be used for uplink multi-panel simultaneous transmission.

In a possible implementation, each resource group includes two reference signal resources, and the panel information further indicates whether panels, terminal receive beams, or beams corresponding to the two reference signal resources in the resource group corresponding to the panel information can be used for uplink multi-panel simultaneous transmission, uplink simultaneous transmission, or uplink multi-beam simultaneous transmission.

In a possible implementation, the method further includes: The network device sends configuration information to the terminal device, where the configuration information indicates one or more of the following information: the X resource sets, a value of M, and a value of N.

According to a third aspect, an embodiment of this application provides a communication apparatus. The apparatus may be used in a terminal device, and has a function of implementing the method in any one of the first aspect or the possible implementations of the first aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

According to a fourth aspect, an embodiment of this application provides a communication apparatus. The apparatus may be used in a network device, and has a function of implementing the method in any one of the second aspect or the possible implementations of the second aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

According to a fifth aspect, an embodiment of this application provides a communication apparatus. The communication apparatus includes a processor and a memory. The memory stores a computer program or computer instructions. The processor is configured to invoke and run the computer program or the computer instructions stored in the memory, to enable the processor to implement any one of the first aspect or the possible implementations of the first aspect, or enable the processor to implement any one of the second aspect or the possible implementations of the second aspect.

Optionally, the communication apparatus further includes an interface circuit. The processor is configured to control the interface circuit to receive and send a signal, information, data, and/or the like.

According to a sixth aspect, an embodiment of this application provides a communication apparatus. The communication apparatus includes a processor. The processor is configured to invoke a computer program or computer instructions in a memory, to enable the processor to implement any one of the first aspect or the possible implementations of the first aspect, or the processor is configured to perform any one of the second aspect or the possible implementations of the second aspect.

Optionally, the communication apparatus further includes an interface circuit. The processor is configured to control the interface circuit to receive and send a signal, information, data, and/or the like.

According to a seventh aspect, an embodiment of this application provides a communication apparatus. The communication apparatus includes a processor. The processor is configured to perform any one of the first aspect or the possible implementations of the first aspect, or the processor is configured to perform any one of the second aspect or the possible implementations of the second aspect.

According to an eighth aspect, an embodiment of this application further provides a computer program product including instructions. When the computer program product runs on a computer, the computer is enabled to perform any one of the first aspect or the possible implementations of the first aspect, or the computer is enabled to perform any one of the second aspect or the possible implementations of the second aspect.

According to a ninth aspect, an embodiment of this application further provides a computer-readable storage medium, including computer instructions. When the instructions are run on a computer, the computer is enabled to perform any one of the first aspect or the possible implementations of the first aspect, or the computer is enabled to perform any one of the second aspect or the possible implementations of the second aspect.

According to a tenth aspect, an embodiment of this application further provides a chip apparatus, including a processor, configured to invoke a computer program or computer instructions in a memory, to enable the processor to perform any one of the first aspect or the possible implementations of the first aspect, or enable the processor to perform any one of the second aspect or the possible implementations of the second aspect.

Optionally, the processor is coupled to the memory through an interface.

According to an eleventh aspect, an embodiment of this application provides a communication system. The communication system includes the communication apparatus according to the third aspect and the communication apparatus according to the fourth aspect.

These aspects or another aspect of this application is clearer and more comprehensible in descriptions of the following embodiments.

### BRIEF DESCRIPTION OF DRAWINGS

FIG. 1 is a diagram of an antenna panel according to an embodiment of this application;
FIG. 2 is a diagram of a multi-station transmission mode according to an embodiment of this application;
FIG. 3 is a diagram of a multi-station transmission mode according to an embodiment of this application;
FIG. 4 is a schematic flowchart of an information transmission method according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

The following describes in detail embodiments of this application with reference to the accompanying drawings of the specification.

A communication method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

The method and an apparatus provided in embodiments of this application are based on a same technical concept or similar technical concepts. Because problem-resolving principles of the method and the apparatus are similar, mutual reference may be made to implementations of the apparatus and the method. Repeated parts are not described.

The following first explains and describes some terms in embodiments of this application, to facilitate understanding of a person skilled in the art.

(1) A beam in embodiments of this application is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator state (transmission configuration indicator state, TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relation, or the like. The foregoing terms are equivalent to each other. Alternatively, the beam may be replaced with another term for representing a beam. This is not limited in this application.

A beam for sending a signal may be referred to as a transmit beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmit beam may be indicated by using the TCI-state.

A beam for receiving a signal may be referred to as a receive beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by using any one of the spatial relation, the uplink TCI-state, and a sounding reference signal (sounding reference signal, SRS) resource (indicating a transmit beam using the SRS). Therefore, the uplink beam may alternatively be replaced with the SRS resource.

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be the wide beam, the narrow beam, or the beam of the another type. The technology for forming the beam may be the beamforming technology or another technology. The beamforming technology may be specifically the digital beamforming technology, the analog beamforming technology, the hybrid digital beamforming technology, the hybrid analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (downlink control information, DCI).

Optionally, a plurality of beams that have same or similar communication features may be considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmit beam of the network device. During the beam measurement, each beam of the network device corresponds to one resource. Therefore, an index of the resource may be used for uniquely identifying the beam corresponding to the resource.

(2) For an uplink beam in embodiments of this application, in a current protocol, a transmit beam for uplink transmission may be indicated by using a spatial relation. A function of the spatial relation is similar to that of a TCI-state, and is for notifying a terminal device of a transmit beam for uplink transmission.

The spatial relation needs to be first configured by using radio resource control (radio resource control, RRC) signaling. Information configured by the radio resource control signaling includes an identifier of the spatial relation, a cell identifier, a target reference signal resource, a path loss measurement reference signal, a power control parameter, and the like. The target reference signal resource indicates a corresponding uplink beam. If a spatial relation #1 is for uplink transmission, and the spatial relation #1 includes a target reference signal resource #2, it indicates that a transmit beam for the uplink transmission is a transmit/receive beam of a target reference signal. For example, when the target reference signal resource is an uplink resource sounding reference signal (sounding reference signal, SRS), it indicates that a transmit beam for uplink transmission is a transmit beam of the SRS (the transmit beam of the SRS is known). For another example, the target reference signal resource is a downlink resource like a synchronization signal block (synchronization signal block, SSB)/channel state information-reference signal (channel state information-reference signal, CSI-RS). It indicates that a transmit beam for uplink transmission is a receive beam of the SSB/CSI-RS (the receive beam of the SSB/CSI-RS is known).

A network device may configure a plurality of spatial relations for the terminal device. Then, one of the spatial relations is activated by a media access control (media access control, MAC) control element (control element, CE) for corresponding data transmission. Uplink transmission includes a physical uplink control channel (physical uplink control channel, PUCCH), an SRS, a physical uplink shared channel (physical uplink shared channel, PUSCH), and the like, and all need a corresponding spatial relation. A spatial relation of the PUCCH is indicated by using MAC CE signaling. A spatial relation of the SRS is also indicated by using the MAC CE signaling. During PUSCH transmission, a specific SRS is associated, and a spatial relation of the SRS is for transmission.

(3) A downlink beam in embodiments of this application may be indicated by using a TCI-state.

A network device may generate different beams that point to different transmission directions. In downlink data transmission, when sending data to a terminal device by using a specified beam, the network device needs to notify the terminal device of information about the transmit beam used by the network device. In this way, the terminal device can receive, by using a receive beam corresponding to the transmit beam, the data sent by the network device. In the 3rd Generation Partnership Project (the 3rd generation partnership project, 3GPP) R15/R16 protocol, the network device indicates, to the terminal device by using a transmission configuration index (transmission configuration index, TCI) field in DCI, related information of a transmit beam used by the network device. Specifically, a size of the TCI field is three bits, and may specifically represent eight different field values (codepoints). Each value of the TCI field corresponds to a TCI-state index, and the TCI-state index may uniquely identify a TCI-state. The TCI-state includes several parameters, and the related information of the transmit beam may be determined by using these parameters. The TCI-state is configured by the network device for each terminal device, and each TCI-state includes an index of the TCI-state and two pieces of QCL information (QCL-Info). Each piece of QCL-Info includes a cell (cell) field and a bandwidth part (bandwidth part, BWP) identifier (bwp-Id), and the cell field and the bandwidth part identifier respectively indicate a BWP of a cell to which the TCI-state is applied. To be specific, different QCL-Info may be configured for different cells or different BWPs of a same cell. The QCL-Info further includes a reference signal (reference signal, RS), and indicates forming a QCL relationship with which reference signal resource. In the R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, "forming a QCL relationship with which reference signal resource" herein essentially means "forming a QCL relationship with which beam". The QCL relationship means that two reference signal resources (or two antenna ports, where the antenna ports and the reference signal resources are also in one-to-one correspondence) have some same spatial parameters. Specific spatial parameters that are the same depend on a type of the QCL-Info, to be specific, another QCL type (qcl-Type) field of the QCL-Info. The QCL type may have four values: {typeA, typeB, typeC, typeD}. typeD is used as an example. typeD indicates that the two reference signal resources have same spatial reception parameter information. That is, two beams have a same receive beam. A maximum of one of two pieces of QCL-Info included in the TCI-state can be of typeD.

(4) A joint beam in embodiments of this application is a beam indicated by a network device for a terminal device, and the beam may be used for a plurality of channels and/or reference signals simultaneously. In embodiments of this application, the beam is referred to as the joint beam, or may have another name. This is not specifically limited in this application. In addition, the joint beam may include an uplink joint beam, a downlink joint beam, and an uplink and downlink joint beam. The uplink joint beam may be used for transmission of a plurality of uplink channels and/or uplink reference signals, and the downlink joint beam may be used for transmission of a plurality of downlink channels and/or downlink reference signals. The uplink and downlink joint beam may be used for transmission of a plurality of uplink channels and/or uplink reference signals, and for transmission of a plurality of downlink channels and/or downlink reference signals. In other words, the uplink and downlink joint beam may be used for both uplink transmission and downlink transmission.

It should be noted that the joint beam may be specifically a TCI-state or another expression. This is not specifically limited in this application. In addition, unless otherwise specified, the joint beam in embodiments of this application may be any one of the uplink joint beam, the downlink joint beam, and the uplink and downlink joint beam in general.

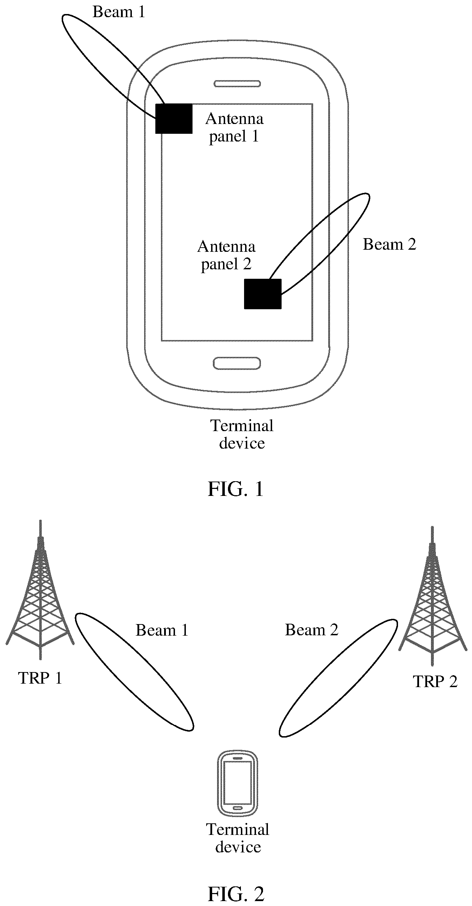

(5) An antenna panel (panel) in embodiments of this application may be an antenna panel of a network device, or may be an antenna panel of a terminal device. There are usually one or more antennas on one antenna panel. These antennas form an antenna array, and beamforming is performed, to form an analog beam. The antenna array may generate beams pointing to different directions, but only one beam can be generated at a same time point. In other words, a plurality of beams may be formed on each antenna panel, and a best beam used by the antenna panel may be determined through beam measurement. The terminal device may be equipped with a plurality of antenna panels. The antenna panels may be distributed at different locations, and face different directions. This can ensure that at least one antenna panel faces the network device regardless of a direction that the terminal device faces, and the terminal device can perform data transmission with the network device. For example, as shown in FIG. 1, the terminal device is equipped with two antenna panels, each antenna panel faces a different direction, and each antenna panel may generate a plurality of beams in different directions, to form comprehensive beam coverage. In FIG. 1, an example in which the terminal device generates a beam 1 by using an antenna panel 1 and generates a beam 2 by using an antenna panel 2 is used for description. The terminal device may simultaneously turn on all antenna panels for transmission. Alternatively, to reduce power consumption of the terminal device, the terminal device may perform transmission by using only one antenna panel once, and another unused antenna panel may be turned off. Whether the antenna panel of the terminal device is in an off state or an on state usually needs to be notified to the network device.

In embodiments of this application, the antenna panel may be referred to as a panel for short, and the antenna panel may also be represented by an antenna panel index (panel index) or the like. In addition, the antenna panel may alternatively be implicitly represented in another manner. For example, the antenna panel may alternatively be represented by using an antenna port (for example, a CSI-RS port, an SRS port, a demodulation reference signal (demodulation reference signal, DMRS) port, a phase tracking reference signal (phase tracking reference signal, PTRS) port, a CRS port, a time-frequency tracking reference signal (tracking reference signal, TRS) port, or an SSB port) or an antenna port group, may be represented by using a resource (for example, a CSI-RS resource, an SRS resource, a DMRS resource, a PTRS resource, a cell reference signal (cell reference signal, CRS) resource, a TRS resource, or an SSB resource) or a resource group, may be represented by using a channel (for example, a PUCCH, a PUSCH, a physical random access channel (physical random access channel, PRACH), a PDSCH, a PDCCH, or a physical broadcast channel (physical broadcast channel, PBCH)), or may be represented by using a beam, QCL, a TCI-state, a spatial relation, or an index configured in the QCL, the TCI-state, or the spatial relation. Alternatively, the antenna panel may be represented by using a beam group, a QCL group, a TCI-state group, a spatial relation group, or the like. In other words, an identifier of the antenna panel/panel in this application may be replaced with an identifier of the foregoing content.

(6) "A plurality of" in embodiments of this application means two or more. "And/or" describes an association relationship for describing associated objects and represents that three relationships may exist. For example, A and/or B may represent the following three cases: Only A exists, both A and B exist, and only B exists. The character "/" usually indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

(7) The terms "including", "having", and any other variant thereof mentioned in descriptions of embodiments of this application are intended to cover a non-exclusive inclusion. For example, a process, a method, a system, a product, or a device that includes a series of steps or units is not limited to listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The network device in embodiments of this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; or may be a network device in a 5G mobile communication system, for example, a next generation NodeB (next generation NodeB, gNB), a transmission reception point (transmission reception point, TRP) or a TP in an NR system; or one or one group of antenna panels (including a plurality of antenna panels) of a base station in the 5G mobile communication system. Alternatively, the network device may be a network node that forms a gNB or a transmission point, for example, a BBU, or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implementing functions of a radio resource control RRC layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or a network device in a core network (core network, CN). This is not limited in this application.

The terminal device in embodiments of this application may be a wireless terminal device that can receive scheduling and indication information of the network device. The terminal device may be a device that provides a user with voice and/or data connectivity, a handheld device that has a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing a user with voice/data connectivity), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a sweeper, a speaker, a set-top box, or the like.

The following briefly describes a technology of performing communication by using a beam.

In a 5G communication system, a beam may be used for data transmission between a network device and a terminal device. The network device may determine a beam to be used, and the terminal device uses a beam based on an indication of the network device. For example, the network device sends downlink control information to the terminal device, where the downlink control information includes a transmission configuration index TCI field, the TCI field may indicate a TCI-state, the TCI-state is for uplink transmission or downlink transmission, and the TCI-state includes a target reference signal resource. When downlink transmission is performed by using the TCI-state, the terminal device performs receiving by using a receive beam corresponding to the target reference signal resource. Because the receive beam corresponding to the target reference signal resource is already determined by the terminal device, the network device may indicate a correct receive beam to the terminal device. When uplink transmission is performed by using the TCI-state, the terminal device performs sending by using a transmit beam corresponding to a target reference signal, or performs sending by using a receive beam corresponding to a target reference signal.

For a terminal device equipped with a plurality of antenna panels, the terminal device may support a multi-station transmission mode. In the multi-station transmission mode, the terminal device may simultaneously perform transmission with two different transmission and reception points (transmission and reception points, TRPs) by using two antenna panels. For example, FIG. 2 is a diagram of a multi-station transmission mode according to an embodiment of this application. A terminal device may perform data transmission with a plurality of TRPs. In the figure, two TRPs are used as an example, and the two TRPs are a TRP 1 and a TRP 2 respectively. The plurality of TRPs may belong to a same cell, or may belong to different cells. When the TRPs belong to the same cell, measurement parameters of the plurality of TRPs are together configured. When the TRPs belong to different cells, measurement parameters of different TRPs are separately configured.

When the terminal device performs simultaneous transmission with the two TRPs, a network device may configure two resource sets for the terminal device, and the two resource sets respectively correspond to the two different TRPs. Each resource set includes one or more resources. For each resource, the network device sends, by using one beam, a signal corresponding to the resource, to measure beam quality of a corresponding TRP. The terminal device may pair and report resources in the two resource sets, to be specific, select one resource with good quality from each resource set to form a pair and report the pair to the network device. The terminal device may report one or more such resource groups (or referred to as beam groups), and RSRP of each resource in each resource group.

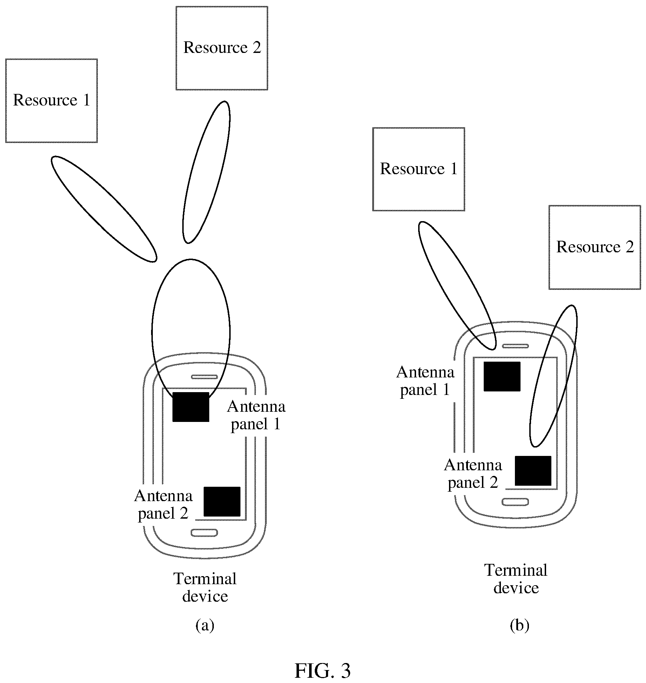

Further, the terminal device needs to ensure that two resources in each resource group can be simultaneously received by the terminal device. In this way, the network device can determine, based on resource group information reported by the terminal device, beams respectively sent by the two TRPs to the terminal device, so that simultaneous transmission with the plurality of TRPs is implemented. As shown in FIG. 3, there are two cases in which two resources in each resource group can be simultaneously received by a terminal device. Case 1: As shown in (a) in FIG. 3, the two resources in the resource group are received by a same receive beam on a same antenna panel of the terminal device. In the figure, an example in which the terminal device receives a resource 1 and a resource 2 by using an antenna panel 1 is used for description. Case 2: As shown in (b) in FIG. 3, the two resources in the resource group are received by receive beams on two antenna panels of the terminal device. To be specific, each antenna panel may generate one beam, the receive beams of the two resources are respectively located on the two antenna panels. In the figure, an example in which the terminal device receives a resource 1 by using an antenna panel 1 and receives a resource 2 by using an antenna panel 2 is used for description.

This application provides a method. The terminal device reports, to the network device, the resource group that can be simultaneously received by the terminal device, to be specific, the two TRPs may simultaneously transmit signals to the terminal device by using the beams corresponding to the resources in the resource group respectively. In addition, the terminal device may report, to the network device, panel information corresponding to each resource in the resource group, so that the network device determines whether the receive beams corresponding to the resources in the resource group are a same beam on a same panel or beams on different panels. In this way, the network device can perform multi-panel uplink transmission scheduling.

It may be understood that the examples in embodiments of this application are merely intended to help a person skilled in the art understand embodiments of this application, and are not intended to limit embodiments of this application to the specific scenarios in the examples. It is clear that a person skilled in the art can make various equivalent modifications or changes based on the examples provided in embodiments of this application, and such modifications or changes also fall within the scope of embodiments of this application.

It may be further understood that the foregoing steps in embodiments of this application are merely examples for description, and are not strictly limited thereto. In addition, sequence numbers of the foregoing steps do not mean an execution sequence. Execution sequences of processes should be determined based on functions and internal logic of the processes, and should not constitute any limitation on an implementation process of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names in embodiments of this application, for example, a first message, do not limit the protection scope of embodiments of this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In the following procedure, an example in which the terminal device simultaneously performs transmission with a maximum of two TRPs is mainly used for description. To be specific, the network device configures a maximum of two resource sets for the terminal device, and a resource group reported by the terminal device includes a maximum of two resources. When the network device configures three or more resource sets, and the resource group reported by the terminal device includes three or more resources, adaptive adjustment may be performed based on the method provided in this application.

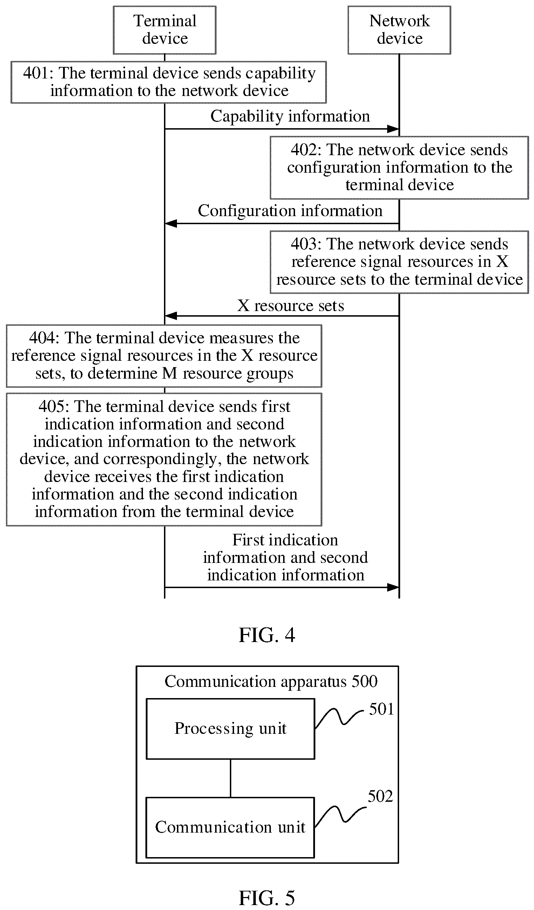

FIG. 4 is a schematic flowchart of an information transmission method according to an embodiment of this application. The method includes the following steps.

S401: A terminal device sends capability information to a network device.

The capability information may indicate at least one of the following information:
whether the terminal device supports reporting of panel information corresponding to a resource group during resource group (beam group) reporting;
a quantity Q of resource groups whose panel information can be reported by the terminal device, where Q is an integer greater than 0;
whether the terminal device supports simultaneous transmission using a plurality of beams or a plurality of panels; and
panel capability information of the terminal device, where the panel capability information may indicate information such as a maximum quantity of transmit ports supported by a panel of the terminal device.

The transmit port may be an SRS port or the like. The maximum quantity of transmit ports may be a quantity greater than or equal to 0, or may be a quantity greater than 0. A maximum quantity of transmit ports of a panel is 0, indicating that the panel is only for downlink transmission and is not for uplink transmission.

It is assumed that the terminal device includes X panels, where X is an integer greater than 0, each panel corresponds to one maximum quantity of transmit ports, and maximum quantities of transmit ports corresponding to different panels may be the same or may be different. In this case, specific content included in the panel capability information of the terminal device may have the following several implementations.

In a first implementation, the panel capability information includes L1 first parameters, where L1 is an integer greater than 0. Each first parameter indicates one maximum quantity of transmit ports, and different first parameters indicate different maximum quantities of transmit ports. Each first parameter may further correspond to one index, and the different first parameters correspond to different indexes. When reporting each first parameter, the terminal device may simultaneously report an index of each first parameter, or may not report an index of each first parameter. If the index of each first parameter is not reported, the index of each first parameter may be preset. For example, the L1 first parameters reported by the terminal device are arranged in a preset sequence, and the index of each first parameter corresponds to a rank of the first parameter. For example, an index of a first parameter ranked first is 0, an index of a first parameter ranked first is 1, and so on. Other cases can be deduced by analogy.

If the maximum quantity of transmit ports reported by the terminal device is the quantity greater than or equal to 0, X maximum quantities of transmit ports corresponding to the X panels have Y1 different values, and Y1 is an integer greater than or equal to 0, a value of L1 may be less than or equal to that of Y1.

If the maximum quantity of transmit ports reported by the terminal device is the quantity greater than 0, and X maximum quantities of transmit ports include a maximum quantity of transmit ports whose value is 0, a value of L1 may be less than or equal to that of Y1-1; or if X maximum quantities of transmit ports do not include a maximum quantity of transmit ports whose value is 0, a value of L1 may be less than or equal to that of Y1.

For example, it is assumed that the terminal device has three panels: a first panel, a second panel, and a third panel, and maximum quantities of transmit ports corresponding to the three panels are 1, 1, and 2 respectively. In this case, Y1=2, and L1=2. The terminal device reports two first parameters to the network device, and the two first parameters are respectively maximum quantities of transmit ports, which may be shown in Table 1.

**Table 1**

| Index | First parameter |
|---|---|
| 0 | {1} |
| 1 | {2} |

It is assumed that the terminal device has three panels: a first panel, a second panel, and a third panel, and maximum quantities of transmit ports corresponding to the three panels are 0, 1, and 2 respectively. In this case, Y1=3. If the maximum quantity of transmit ports reported by the terminal device is the quantity greater than or equal to 0, and the terminal device reports three first parameters, the three first parameters are respectively maximum quantity of transmit ports, which may be shown in Table 2.

**Table 2**

| Index | First parameter |
|---|---|
| 0 | {0} |
| 1 | {1} |
| 2 | {2} |

If the maximum quantity of transmit ports reported by the terminal device is the quantity greater than 0, and the terminal device reports two first parameters, the two first parameters are respectively maximum quantity of transmit ports, which may be shown in Table 3.

**Table 3**

| Index | First parameter |
|---|---|
| 0 | {1} |
| 1 | {2} |

In a second implementation, the panel capability information includes L2 second parameters, where L2 is an integer greater than 0. Each second parameter indicates one or more maximum quantities of transmit ports. Each second parameter may further correspond to one index, and the different second parameters correspond to different indexes. When reporting each second parameter, the terminal device may simultaneously report an index of each second parameter, or may not report an index of each second parameter. If the index of each second parameter is not reported, the index of each second parameter may be preset. For example, the L2 second parameters reported by the terminal device are arranged in a preset sequence, and the index of each second parameter corresponds to a rank of the second parameter. For example, an index of a second parameter ranked first is 0, an index of a second parameter ranked first is 1, and so on. Other cases can be deduced by analogy.

If the maximum quantity of transmit ports reported by the terminal device is the quantity greater than or equal to 0, X maximum quantities of transmit ports corresponding to the X panels have Y1 different values, a maximum quantity of transmit ports with Y3 values in the Y1 values corresponds to a plurality of panels, and Y3 is an integer greater than or equal to 0, a value of L2 may be less than or equal to that of Y1+Y3+Y1×(Y1-1).

If the maximum quantity of transmit ports reported by the terminal device is the quantity greater than 0, X maximum quantities of transmit ports corresponding to the X panels have Y2 different values that are greater than 0, a maximum quantity of transmit ports with Y4 values in the Y2 values corresponds to a plurality of panels, and Y4 is an integer greater than or equal to 0, a value of L2 may be less than or equal to that of Y2+Y4+Y2×(Y2-1).

If one second parameter indicates one maximum quantity of transmit ports, the maximum quantity of transmit ports indicated by the second parameter corresponds to one panel of the terminal device; or if one second parameter indicates a plurality of maximum quantities of transmit ports, each of the plurality of maximum quantities of transmit ports corresponds to one panel of the terminal device. In other words, the plurality of maximum quantities of transmit ports respectively represent maximum quantities of transmit ports of the plurality of panels of the terminal device.

For example, it is assumed that the terminal device has three panels: a first panel, a second panel, and a third panel, and maximum quantities of transmit ports corresponding to the three panels are 1, 1, and 2 respectively. In this case, Y1=2, and Y3=1.

In this case, the terminal device needs to report 5=2+1+2×(2-1) second parameters, and maximum quantities of transmit ports indicated by the five second parameters may be shown in Table 4.

**Table 4**

| Index | Second parameter |
|---|---|
| 0 | {1} |
| 1 | {2} |
| 2 | {1, 1} |
| 3 | {1, 2} |
| 4 | {2, 1} |

| | |
|---|---|
| {1} indicates that the second parameter corresponds to a single panel, and a maximum quantity of transmit ports of the panel is 1. {2} is similar to {1}. {1, 1} indicates that the second parameter corresponds to two panels, and maximum quantities of transmit ports of the two panels are 1 and 1 respectively. {1, 2} and {2, 1} are similar to {1, 1}. A difference between { 1, 2} and {2, 1} lies in that {1, 2} indicates that maximum quantities of transmit ports corresponding to the 1^{st} and 2^{nd} panels in two panels corresponding to the second parameter are respectively 1 and 2, and {2, 1} indicates that maximum quantities of transmit ports corresponding to the 1^{st} and 2^{nd} panels in two panels corresponding to the second parameter are respectively 2 and 1. | |

It is assumed that the terminal device has three panels: a first panel, a second panel, and a third panel, and maximum quantities of transmit ports corresponding to the three panels are 0, 1, and 2 respectively. If the maximum quantity of transmit ports reported by the terminal device is the quantity greater than or equal to 0, Y1=3, Y3=0, and the terminal device needs to report 9=3+0+3×(3-1) second parameters, maximum quantities of transmit ports indicated by the nine second parameters may be shown in Table 5.

**Table 5**

| Index | Second parameter |
|---|---|
| 0 | {0} |
| 1 | {1} |
| 2 | {2} |
| 3 | {0, 1} |
| 4 | {1, 0} |
| 5 | {0, 2} |
| 6 | {2, 0} |
| 7 | {1, 2} |
| 8 | {2, 1} |

If the maximum quantity of transmit ports reported by the terminal device is the quantity greater than 0, Y2=2, Y4=0, and the terminal device needs to report 4=2+0+2×(2-1) second parameters, maximum quantities of transmit ports indicated by the four second parameters may be shown in Table 6.

**Table 6**

| Index | Second parameter |
|---|---|
| 0 | {1} |
| 1 | {2} |
| 2 | {1, 2} |
| 3 | {2, 1} |

In a third implementation, the panel capability information includes L2 second parameters, and each second parameter indicates one or more maximum quantities of transmit ports and a quantity of panels corresponding to the one or more maximum quantities of transmit ports. Each second parameter may further correspond to one index, and the different second parameters correspond to different indexes. For a value of L2, refer to the foregoing descriptions. Details are not described herein again.

For example, it is assumed that the terminal device has three panels: a first panel, a second panel, and a third panel, and maximum quantities of transmit ports corresponding to the three panels are 1, 1, and 2 respectively. In this case, Y1=2, and Y3=1.

In this case, the terminal device needs to report 5=2+1+2×(2-1) second parameters, and maximum quantities of transmit ports indicated by the five second parameters may be shown in Table 7.

**Table 7**

| Index | Second parameter |
|---|---|
| 0 | {1, 1} |
| 1 | {2, 1} |
| 2 | { 1, 1, 2} |
| 3 | {1, 2, 2} |
| 4 | {2, 1, 2} |
| 5 | {0, 2} |

The last parameter in each second parameter indicates a quantity of panels corresponding to the second parameter, and the first one or two parameters indicate maximum quantities of transmit ports corresponding to one or two panels. For example, the second parameter is {2, 1}, the last digit 1 in the second parameter indicates that the second parameter corresponds to one panel, and the 1^{st} digit 2 in the second parameter indicates that a maximum quantity of transmit ports of the panel is 2. The second parameter is {1, 2, 2}, the last digit 2 in the second parameter indicates that the second parameter corresponds to two panels, and the 1^{st} digit 2 and the 2^{nd} digit 1 in the second parameter indicate that maximum quantities of transmit ports of the two panels are 1 and 2 respectively.

It is assumed that the terminal device has three panels: a first panel, a second panel, and a third panel, and maximum quantities of transmit ports corresponding to the three panels are 0, 1, and 2 respectively. If the maximum quantity of transmit ports reported by the terminal device is the quantity greater than or equal to 0, Y1=3, Y3=0, and the terminal device needs to report 9=3+0+3×(3-1) second parameters, maximum quantities of transmit ports indicated by the nine second parameters may be shown in Table 8.

**Table 8**

| Index | Second parameter |
|---|---|
| 0 | {0, 1} |
| 1 | {1, 1} |
| 2 | {2, 1} |
| 3 | {0, 1, 1} |
| 4 | {0, 2, 2} |
| 5 | {1, 0, 2} |
| 6 | {2, 0, 2} |
| 7 | {1, 2, 2} |
| 8 | {2, 1, 2} |

If the maximum quantity of transmit ports reported by the terminal device is the quantity greater than 0, Y2=2, Y4=0, and the terminal device needs to report 4=2+0+2×(2-1) second parameters, maximum quantities of transmit ports indicated by the four second parameters may be shown in Table 9.

**Table 9**

| Index | Second parameter |
|---|---|
| 0 | {1, 1} |
| 1 | {2, 1} |
| 2 | {1, 2, 2} |
| 3 | {2, 1, 2} |

The foregoing is merely an example. There may be another possible implementation for the parameter included in the panel capability information. This is not limited in this application.

S402: The network device sends configuration information to the terminal device, where the configuration information is for configuring X resource sets, and X is an integer greater than 1.

Each of the X resource sets includes at least M reference signal resources, each reference signal resource may correspond to one beam, and in a resource set, different reference signal resources may correspond to a same beam or different beams. This is not limited in this application.

There may be a plurality of implementations for specifically sending the configuration information by the network device. For example, the network device may send the configuration information to the terminal device by using higher layer signaling, where the configuration information indicates the X resource sets. Specifically, the network device may configure the X resource sets in a resource configuration (resource config) field or a resource setting (resource setting) field of the higher layer signaling. For each reference signal resource in the X resource sets, the configuration information may indicate information such as a start location and an index of each reference signal resource.

The configuration information may be further used for configuring related information reported by a beam of the terminal device, for example, may indicate one or more of the following information:
configuring the terminal device to perform resource group reporting across the resource sets, where optionally, the network device configures or specifies in a protocol whether a receive beam or a panel of the terminal device corresponding to a corresponding reference signal resource in a resource group reported by the terminal device can be used for uplink simultaneous transmission, uplink multi-beam simultaneous transmission, or uplink multi-panel simultaneous transmission; and optionally, the network device configures or specifies in a protocol that the resource group reported by the terminal device needs to be simultaneously received by the terminal device;
configuring a value of a quantity M of to-be-reported resource groups, where M is an integer greater than 0, and for example, the value of M may be any one of {1, 2, 3, 4}; and
configuring a value of a quantity N of resource groups whose panel information is to be reported, indicating that the terminal device needs to report the panel information corresponding to N of the M resource groups, where N is an integer less than or equal to M and greater than 0.

Alternatively, N may not need to be configured. For example, it is specified in a protocol that N is equal to M; or it is agreed on in advance that N is equal to a minimum value between Q and M.

Optionally, if the panel capability information reported by the terminal device in S401 includes the L1 first parameters, the network device may further determine the L2 second parameters based on the L1 first parameters, where each second parameter indicates one or more maximum quantities of transmit ports, or each second parameter indicates one or more maximum quantities of transmit ports and a quantity of panels corresponding to the one or more maximum quantities of transmit ports. The network device may send the L2 second parameters to the terminal device by using the configuration information, or may separately send the L2 second parameters to the terminal device. When sending the L2 second parameters, the network device may simultaneously send the index of each second parameter, or may not send the index of each second parameter. If the index of each second parameter is not sent, the index of each second parameter may be preset. For example, the L2 second parameters sent by the network device are arranged in the preset sequence, and the index of each second parameter corresponds to the rank of the second parameter. For example, the index of the second parameter ranked first is 0, the index of the second parameter ranked first is 1, and so on. Other cases can be deduced by analogy.

Further, an example in which one resource group includes two reference signal resources is used. The value of L2 determined by the network device may be less than or equal to L1+L1×L1.

For example, it is assumed that each second parameter indicates one or more maximum quantities of transmit ports, and the terminal device reports two first parameters that are {1} and {2} respectively. In this case, a quantity L2 of second parameters determined by the network device based on the two first parameters is 2+2×10=6, and six second parameters are {1}, {2}, {1, 1}, {2, 2}, {1, 2}, and {2, 1} respectively. For a meaning of the foregoing second parameter, refer to the foregoing descriptions of the second parameter. Details are not described herein again. In this case, the L2 second parameters sent by the network device may be shown in Table 10.

**Table 10**

| Index | Second parameter |
|---|---|
| 0 | {1} |
| 1 | {2} |
| 2 | {1, 1} |
| 3 | {2, 2} |
| 4 | {1, 2} |
| 5 | {2, 1} |

Further, an example in which one resource group includes two reference signal resources is used. The value of L2 determined by the network device may be less than or equal to L1+L1×L1.

For another example, it is assumed that each second parameter indicates one or more maximum quantities of transmit ports and a quantity of panels corresponding to the one or more maximum quantities of transmit ports, and the terminal device reports two first parameters that are {1} and {2} respectively. In this case, a quantity L2 of second parameters determined by the network device based on the two first parameters is 2+2×10=6, and six second parameters are { 1, 1}, {2, 1}, {1, 1, 2}, {2, 2, 2}, {1, 2, 2}, and {2, 1, 2} respectively. For a meaning of the foregoing second parameter, refer to the foregoing descriptions of the second parameter. Details are not described herein again. The L2 second parameters sent by the network device may be shown in Table 11.

**Table 11**

| Index | Second parameter |
|---|---|
| 0 | {1, 1} |
| 1 | {2, 1} |
| 2 | {1, 1, 2} |
| 3 | {2, 2, 2} |
| 4 | {1, 2, 2} |
| 5 | {2, 1, 2} |

S403: The network device sends the reference signal resources in the X resource sets to the terminal device.

Specifically, the network device may separately send a reference signal to the terminal device by using each reference signal resource in the X resource sets, and the reference signal in each reference signal resource is sent by using a beam corresponding to the reference signal resource.

S404: The terminal device measures the reference signal resources in the X resource sets, to determine M resource groups.

The terminal device may measure the reference signal in each reference signal resource in the X resource sets, to obtain measurement information corresponding to each reference signal resource. The measurement information may be information such as RSRP.

The terminal device may determine the M resource groups based on the measurement information obtained by measuring each reference signal resource in the X resource sets. X reference signal resources in each resource group determined by the terminal device include one reference signal resource selected from each of the X resource sets, and the M resource groups are determined in total. To be specific, each of the M resource groups includes the X reference signal resources, the X reference signal resources in each resource group belong to different resource sets in the X resource sets, and each reference signal resource can belong to only one resource group.

How the terminal device specifically determines the M resource groups from the X resource sets is not limited in this application. For example, in a possible implementation, assuming that the measurement information is the RSRP or a signal to interference plus noise ratio (signal to interference plus noise ratio, SINR), the terminal device may select one reference signal resource from each of the X resource sets, and selects X reference signal resources in total. After the reference signal resource in each resource set is selected to a resource group, the reference signal resource cannot be selected to another resource group. The reference signal resource selected by the terminal device from each resource set may be a reference signal resource with maximum RSRP or a maximum SINR in the resource set, and the terminal device may use the X reference signal resources as a resource group. Then, the terminal device selects one reference signal resource from each resource set, and selects X reference signal resources in total. The X reference signal resources may be further used as a group. By analogy, the terminal device may determine the M resource groups.

Further, the terminal device may further determine N resource groups whose panel information needs to be reported from the M resource groups. Specifically, which N resource groups are resource groups whose panel information needs to be reported is not limited in this application. For example, N resource groups with maximum average RSRP in the M resource groups may be used as the resource groups whose panel information needs to be reported. Alternatively, N resource groups with minimum average RSRP in the M resource groups may be used as the resource groups whose panel information needs to be reported.

S405: The terminal device sends first indication information and second indication information to the network device, and correspondingly, the network device receives the first indication information and the second indication information from the terminal device.

The terminal device may send the first indication information and the second indication information by using one message, or may send the first indication information and the second indication information by using different messages.

The first indication information indicates the M resource groups. For example, the first indication information includes an index of each resource in the M resource groups. The first indication information may further indicate measurement information of each reference signal resource in the M resource groups, for example, indicate information such as RSRP or an SINR of each reference signal resource.

The second indication information may indicate panel information respectively corresponding to the N resource groups in the M resource groups. Specifically, the second indication information includes N pieces of panel information, and each piece of panel information indicates at least one of the following information of a resource group corresponding to the panel information: information 1: a maximum quantity of transmit ports of a panel corresponding to each reference signal resource in the resource group; information 2: whether panels corresponding to the X reference signal resources in the resource group are the same; and information 3: a quantity of panels corresponding to the X reference signal resources in the resource group.

For example, the resource group includes two reference signal resources. The information 1 may include two maximum quantities of transmit ports or indexes of the maximum quantities of transmit ports. The information 2 and the information 3 in the panel information may be located before the information 1, for example, may be shown in Table 12.

**Table 12**

| |
|---|
| Information 2 |
| Information 3 |
| Information 1 |

If the information 2 indicates that panels corresponding to the two reference signal resources in the resource group are the same, it may be considered that the maximum quantities of transmit ports of the panels corresponding to the two reference signal resources are the same, and it may be determined that the two reference signal resources correspond to one panel. In this case, the panel information may not include the information 3. In addition, the information 2 may include only a maximum quantity of transmit ports or an index of a maximum quantity of transmit ports.

For another example, the resource group includes two reference signal resources. The information 1 may include two maximum quantities of transmit ports or indexes of the maximum quantities of transmit ports. The information 1 in the panel information may be located before the information 2 and the information 3, for example, may be shown in Table 13.

**Table 13**

| |
|---|
| Information 1 |
| Information 2 |
| Information 3 |

If the two maximum quantities of transmit ports or the indexes of the maximum quantities of transmit ports included in the information 1 are different, it may be considered that the two reference signal resources correspond to different panels, and it may be determined that the two reference signal resources correspond to two panels. In this case, the panel information may not include the information 2 and the information 3.

Optionally, the panel information may further indicate a resource group corresponding to the panel information in the M resource groups. For example, the panel information further indicates a resource group identifier of the resource group corresponding to the panel information. For example, the panel information includes a resource group identifier field, the field indicates the resource group corresponding to the panel information, and the field may include the identifier of the resource group corresponding to the panel information. A length of the field may be determined based on a value relationship between M and N. When N<M, the length of the field may be a smallest integer not less than log₂M. When N=M, the length of the field may be 0. In this case, the reported N=M pieces of panel information are in one-to-one correspondence with the M resource groups, and a resource group corresponding to each piece of panel information may not be specifically indicated.

If the panel information does not indicate the resource group corresponding to the panel information in the M resource groups, locations of the N resource groups in the M resource groups may be agreed on in advance. For example, the N resource groups having corresponding panel information are preset N resource groups of the M resource groups. For example, the M resource groups reported by the terminal device are arranged in a sequence of numbers, and it may be agreed on in advance that the N resource groups having the corresponding panel information are arranged in front. In other words, the N resource groups arranged in front have the corresponding panel information.

According to the foregoing method, the terminal device may indicate N resource groups in the M resource groups to which the N resource groups belong.

Optionally, if the two reference signal resources in the resource group corresponding to the panel information correspond to different panels, the panel information further indicates whether the two panels corresponding to the two reference signal resources in the resource group corresponding to the panel information can be used for uplink multi-beam simultaneous transmission or uplink multi-panel simultaneous transmission, or indicates whether receive beams or panels corresponding to the two reference signal resources in the corresponding resource group can be used for uplink simultaneous transmission. If all resources in the resource group corresponding to the panel information correspond to a same panel, the information may not be included.

In an implementation, the panel information further indicates whether the panels or terminal receive beams corresponding to the two reference signal resources in the resource group corresponding to the panel information can be used for uplink multi-panel simultaneous transmission, uplink simultaneous transmission, or uplink multi-beam simultaneous transmission; or indicates whether the receive beams or panels corresponding to the two reference signal resources in the corresponding resource group can be used for uplink simultaneous transmission. Specifically, the panel information may be a 1-bit field. When the field is 0, it indicates that the panels or terminal receive beams corresponding to the two reference signal resources in the resource group corresponding to the panel information cannot be used for uplink multi-panel simultaneous transmission, uplink simultaneous transmission, or uplink multi-beam simultaneous transmission; and when the field is 1, it indicates that the panels or terminal receive beams corresponding to the two reference signal resources in the resource group corresponding to the panel information can be used for uplink multi-panel simultaneous transmission, uplink simultaneous transmission, or uplink multi-beam simultaneous transmission. Optionally, if all the resources in the resource group corresponding to the panel information correspond to the same panel, the information may not be included.

In this embodiment of this application, the panel information may be implemented in a plurality of manners. The following separately provides descriptions by using an example in which the resource group includes two reference signal resources (which are respectively a first reference signal resource and a second reference signal resource).

In a first possible implementation, an example in which the terminal device and the network device agree on the L1 first parameters is used. The panel information may include at least one of the following information:
first information, where the first information indicates one of the L1 first parameters, and a maximum quantity of transmit ports indicated by the first parameter corresponding to the first information is a maximum quantity of transmit ports of a panel corresponding to the first reference signal resource;
second information, where the second information indicates one of the L1 first parameters, and a maximum quantity of transmit ports indicated by the first parameter corresponding to the second information is a maximum quantity of transmit ports of a panel corresponding to the second reference signal resource; and the first information and the second information may indicate a maximum quantity of transmit ports of a panel corresponding to each reference signal resource in the resource group corresponding to the panel information;
third information, where the third information indicates whether the panels corresponding to the X reference signal resources in the resource group corresponding to the panel information are the same; and
fourth information, where the fourth information indicates a quantity of panels corresponding to the X reference signal resources in the resource group.

The first information may be one of the L1 first parameters, may be an index of one of the L1 first parameters, or may be other information indicating the first parameter. The second information may be one of the L1 first parameters, may be an index of one of the L1 first parameters, or may be other information indicating the first parameter. If the panel information does not include the fourth information, the quantity of panels corresponding to the X reference signal resources in the resource group may be indicated in an indirect manner. For example, when the X reference signal resources in the resource group corresponding to the panel information correspond to a same panel, it indicates that the quantity of panels corresponding to the X reference signal resources in the resource group is 1, and in this case, the fourth information may not be included; and for example, when the resource group includes two reference signal resources, if the two reference signal resources in the resource group corresponding to the panel information correspond to different panels, it indicates that a quantity of panels corresponding to the two reference signal resources in the resource group is 2, and in this case, the fourth information may not be included.

For example, it is assumed that the terminal device reports two first parameters that are {1} and {2} respectively, and corresponding indexes are 0 and 1 respectively. If a resource group includes two reference signal resources: a first reference signal resource and a second reference signal resource, a maximum quantity of transmit ports of a panel corresponding to the first reference signal resource is 1, and a maximum quantity of transmit ports of a panel corresponding to the second reference signal resource is 2, panel information corresponding to the resource group may be shown in Table 14.

**Table 14**

| | |
|---|---|
| First information | 0 |
| Second information | 1 |
| Third information | 0 |
| Fourth information | 1 |

The first information is 0, and it indicates that a first parameter indicated by the first information is {1}, in other words, indicates the maximum quantity of transmit ports of the panel corresponding to the first reference signal resource. The second information is 1, and it indicates that a first parameter indicated by the second information is {2}, in other words, indicates the maximum quantity of transmit ports of the panel corresponding to the second reference signal resource. When the third information is 0, it indicates that the first reference signal resource and the second reference signal resource correspond to different panels. Correspondingly, if the third information is 1, it indicates that the first reference signal resource and the second reference signal resource correspond to the same panel. When the fourth information is 1, it indicates that the quantity of panels corresponding to the first reference signal resource and the second reference signal resource is 2. Correspondingly, if the fourth information is 0, it indicates that the quantity of panels corresponding to the first reference signal resource and the second reference signal resource is 1.

In a second possible implementation, an example in which the terminal device and the network device agree on the L2 second parameters and each second parameter indicates the one or more maximum quantities of transmit ports is used. In this implementation, the panel information may indicate one of the L2 second parameters, so that at least one of information 1, information 2, and information 3 is indicated. For example, the panel information may be one of the L2 second parameters, or the panel information may be an index of one of the L2 second parameters.

In this implementation, when the panel information indicates one of the L2 second parameters, it is equivalent to a case in which the panel information indicates the one or more maximum quantities of transmit ports.

When the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, where the first reference signal resource and the second reference signal resource in the resource group corresponding to the panel information correspond to a same panel.

When the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, where the first reference signal resource and the second reference signal resource in the resource group corresponding to the panel information correspond to different panels.

For example, assuming that there are six second parameters, a correspondence between a second parameter and an index may be shown in Table 15.

**Table 15**

| Index | Second parameter |
|---|---|
| 000 | {1} |
| 001 | {2} |
| 010 | {1, 1} |
| 011 | {2, 2} |
| 100 | {1, 2} |
| 101 | {2, 1} |

With reference to Table 15, if the panel information is 001, the second parameter indicated by the panel information is {2}, and the maximum quantity of transmit ports indicated by the second parameter is 2. If a resource group includes two reference signal resources: a first reference signal resource and a second reference signal resource, a maximum quantity of transmit ports of a panel corresponding to the first reference signal resource in the resource group corresponding to the panel information is 2, and a maximum quantity of transmit ports of a panel corresponding to the second reference signal resource is 2. In addition, the first reference signal resource and the second reference signal resource correspond to a same panel. In other words, a quantity of panels corresponding to the first reference signal resource and the second reference signal resource is 1. If the panel information is 011, the second parameter indicated by the panel information is {2, 2}, and the two maximum quantities of transmit ports indicated by the second parameter are 2 and 2 respectively, it indicates that a maximum quantity of transmit ports of a panel corresponding to the first reference signal resource in the resource group corresponding to the panel information is 2, and a maximum quantity of transmit ports of a panel corresponding to the second reference signal resource is 2, but the first reference signal resource and the second reference signal resource correspond to different panels. In other words, a quantity of panels corresponding to the first reference signal resource and the second reference signal resource is 2. Other cases may be deduced by analogy, and details are not described again.

In the foregoing example, the panel information is the index of the second parameter, and the panel information may alternatively be the second parameter. For example, with reference to Table 15, if the panel information is {2}, the maximum quantity of transmit ports indicated by the panel information is 2. In this case, a maximum quantity of transmit ports of a panel corresponding to the first reference signal resource in the resource group corresponding to the panel information is 2, a maximum quantity of transmit ports of a panel corresponding to the second reference signal resource is 2, and the first reference signal resource and the second reference signal resource correspond to a same panel. In other words, a quantity of panels corresponding to the first reference signal resource and the second reference signal resource is 1. If the panel information is {2, 2}, and the two maximum quantities of transmit ports indicated by the panel information are 2 and 2 respectively, it indicates that a maximum quantity of transmit ports of a panel corresponding to the first reference signal resource in the resource group corresponding to the panel information is 2, and a maximum quantity of transmit ports of a panel corresponding to the second reference signal resource is 2, but the first reference signal resource and the second reference signal resource correspond to different panels. In other words, a quantity of panels corresponding to the first reference signal resource and the second reference signal resource is 2. Other cases may be deduced by analogy, and details are not described again.

Further, if the maximum quantity of transmit ports reported by the terminal device is a quantity greater than 0, the panel information further indicates whether one or two panels corresponding to the two reference signal resources in the resource group corresponding to the panel information can be used for uplink transmission, uplink multi-beam simultaneous transmission, or uplink multi-panel simultaneous transmission. For example, with reference to Table 15, when the panel information is 000 to 101, the panel information indicates one second parameter. When the panel information is one of 110 to 111, a maximum quantity of transmit ports corresponding to at least one reference signal resource in the two reference signal resources in the resource group corresponding to the panel information may be 0, and the panel cannot be used for uplink simultaneous transmission. In this case, if the panel information is one of 110 to 111, it indicates that one or two panels corresponding to the two reference signal resources in the resource group corresponding to the panel information cannot be used for uplink transmission, uplink multi-beam simultaneous transmission, or uplink multi-panel simultaneous transmission.

Further, if each second parameter indicates one or more maximum quantities of transmit ports and a quantity of panels corresponding to the one or more maximum quantities of transmit ports, in this implementation, when the panel information indicates one of the L2 second parameters, it is equivalent to a case in which the panel information indicates the one or more maximum quantities of transmit ports and the quantity of panels corresponding to the one or more maximum quantities of transmit ports. In this case, a quantity of panels corresponding to the X reference signal resources in the resource group corresponding to the panel information is equal to the quantity of panels indicated by the panel information.

For example, assuming that there are six second parameters, a correspondence between the second parameter and the index may be shown in Table 16.

**Table 16**

| Index | Second parameter |
|---|---|
| 000 | {1, 1} |
| 001 | {2, 1} |
| 010 | {1, 1, 2} |
| 011 | {2, 2, 2} |
| 100 | {1, 2, 2} |
| 101 | {2, 1, 2} |

With reference to Table 16, if the panel information is 001, the second parameter indicated by the panel information is {2, 1}, the maximum quantity of transmit ports indicated by the second parameter is 2, and the indicated quantity of panels is 1. If a resource group includes two reference signal resources: a first reference signal resource and a second reference signal resource, a maximum quantity of transmit ports of a panel corresponding to the first reference signal resource in the resource group corresponding to the panel information is 2, and a maximum quantity of transmit ports of a panel corresponding to the second reference signal resource is 2. In addition, the first reference signal resource and the second reference signal resource correspond to a same panel, and a quantity of panels corresponding to the first reference signal resource and the second reference signal resource is 1. If the panel information is 011, and the second parameter indicated by the panel information is {2, 2, 2}, the two maximum quantities of transmit ports indicated by the second parameter are 2 and 2 respectively, and the indicated quantity of panels is 2. It indicates that a maximum quantity of transmit ports of a panel corresponding to the first reference signal resource in the resource group corresponding to the panel information is 2, and a maximum quantity of transmit ports of a panel corresponding to the second reference signal resource is 2, but the first reference signal resource and the second reference signal resource correspond to different panels, and a quantity of panels corresponding to the first reference signal resource and the second reference signal resource is 2. Other cases may be deduced by analogy, and details are not described again.

In the foregoing example, the panel information is the index of the second parameter, and the panel information may alternatively be the second parameter. For example, with reference to Table 16, if the panel information is {2, 1}, the maximum quantity of transmit ports indicated by the panel information is 2. In this case, a maximum quantity of transmit ports of a panel corresponding to the first reference signal resource in the resource group corresponding to the panel information is 2, a maximum quantity of transmit ports of a panel corresponding to the second reference signal resource is 2, and the first reference signal resource and the second reference signal resource correspond to a same panel. In other words, a quantity of panels corresponding to the first reference signal resource and the second reference signal resource is 1. If the panel information is {2, 2, 1}, and the two maximum quantities of transmit ports indicated by the panel information are 2 and 2 respectively, it indicates that a maximum quantity of transmit ports of a panel corresponding to the first reference signal resource in the resource group corresponding to the panel information is 2, and a maximum quantity of transmit ports of a panel corresponding to the second reference signal resource is 2, but the first reference signal resource and the second reference signal resource correspond to different panels. In other words, a quantity of panels corresponding to the first reference signal resource and the second reference signal resource is 2. Other cases may be deduced by analogy, and details are not described again.

Further, if the maximum quantity of transmit ports reported by the terminal device is a quantity greater than 0, the panel information further indicates whether one or two panels corresponding to the two reference signal resources in the resource group corresponding to the panel information can be used for uplink transmission, uplink multi-beam simultaneous transmission, or uplink multi-panel simultaneous transmission. For example, with reference to Table 16, when the panel information is 000 to 101, the panel information indicates one second parameter. When the panel information is one of 110 to 111, a maximum quantity of transmit ports corresponding to at least one reference signal resource in the two reference signal resources in the resource group corresponding to the panel information may be 0, and the panel cannot be used for uplink simultaneous transmission. In this case, if the panel information is one of 110 to 111, it indicates that one or two panels corresponding to the two reference signal resources in the resource group corresponding to the panel information cannot be used for uplink transmission, uplink multi-beam simultaneous transmission, or uplink multi-panel simultaneous transmission.

Optionally, after the network device obtains the first indication information and the second indication information, if the terminal device is scheduled to perform uplink simultaneous transmission, two beams sent by the terminal device in uplink need to correspond to two different panels. The network device may determine, based on the panel information associated with the resource group reported by the terminal device, which resource groups correspond to the two panels, and then send an uplink transmit beam indication to the terminal device, where the uplink transmit beam indication includes reference signal resources of the two uplink transmit beams in the uplink simultaneous transmission performed by the terminal device, and the two reference signal resources are from one resource group, and correspond to the two different panels.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 5, an embodiment of this application further provides a communication apparatus 500, configured to implement a function of the network device or the terminal device in the foregoing method. For example, the apparatus may be a software module or a chip system. In this embodiment of this application, the chip system may include a chip, or may include a chip and another discrete component. The communication apparatus 500 may include a processing unit 501 and a communication unit 502.

In this embodiment of this application, the communication unit may also be referred to as a transceiver unit, and may include a sending unit and/or a receiving unit, which are/is respectively configured to perform sending and receiving steps of the network device or the terminal device in the foregoing method embodiment.

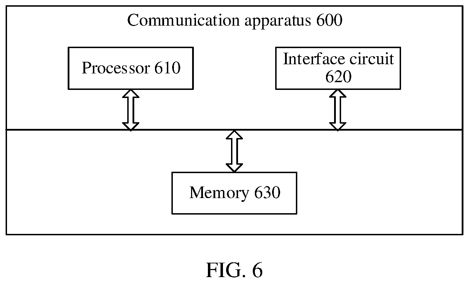

The following describes in detail communication apparatuses provided in embodiments of this application with reference to FIG. 5 and FIG. 6. It should be understood that descriptions of apparatus embodiments correspond to the descriptions of the method embodiment. Therefore, for content that is not described in detail, refer to the method embodiment. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 502 and that is configured to implement a receiving function may be considered as the receiving unit, and a component that is in the communication unit 502 and that is configured to implement a sending function may be considered as the sending unit. That is, the communication unit 502 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 500 performs the function of the terminal device in the procedure shown in FIG. 4 in the foregoing embodiment:
the processing unit is configured to measure reference signal resources in X resource sets, to determine M resource groups, where X is an integer greater than 1, and M is an integer greater than 0; and each resource set includes at least M reference signal resources, each resource group includes X reference signal resources, and the X reference signal resources in each resource group belong to different resource sets in the X resource sets; and
the communication unit is configured to send first indication information and second indication information to the network device.

The first indication information indicates the M resource groups, the second indication information includes panel information respectively corresponding to N of the M resource groups, and N is an integer less than or equal to M.

In a possible implementation, each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

In a possible implementation, the panel information further indicates a resource group identifier of the resource group corresponding to the panel information.

In a possible implementation, the N resource groups are preset N resource groups of the M resource groups.

In a possible implementation, before the terminal device measures the X resource sets, the method further includes:
the terminal device sends L1 first parameters to the network device, where each first parameter indicates one maximum quantity of transmit ports, different first parameters indicate different maximum quantities of transmit ports, and L1 is an integer greater than 0.

In a possible implementation, X=2, each resource group includes a first reference signal resource and a second reference signal resource, and the panel information includes at least one of the following information: first information, second information, and third information.

The first information indicates one of the L1 first parameters, and a maximum quantity of transmit ports indicated by the first parameter corresponding to the first information is a maximum quantity of transmit ports of a panel corresponding to the first reference signal resource.

The second information indicates one of the L1 first parameters, and a maximum quantity of transmit ports indicated by the first parameter corresponding to the second information is a maximum quantity of transmit ports of a panel corresponding to the second reference signal resource.

The third information indicates whether the panels corresponding to the X reference signal resources in the resource group corresponding to the panel information are the same.

In a possible implementation, the communication unit is further configured to send L2 second parameters to the network device, where each second parameter indicates one or more maximum quantities of transmit ports, and L2 is an integer greater than 0.

In a possible implementation, the communication unit is further configured to receive L2 second parameters from the network device, where each second parameter indicates one or more maximum quantities of transmit ports, L2 is an integer greater than 0, and the L2 second parameters are determined based on the L1 first parameters; and if the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

In a possible implementation, X=2, the resource group corresponding to the panel information includes a first reference signal resource and a second reference signal resource, and the panel information indicates one of the L2 second parameters.

When the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, where the first reference signal resource and the second reference signal resource in the resource group corresponding to the panel information correspond to a same panel.

When the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, where the first reference signal resource and the second reference signal resource in the resource group corresponding to the panel information correspond to different panels.

In a possible implementation, each second parameter further indicates a quantity of panels corresponding to the one or more maximum quantities of transmit ports, and the method further includes: The quantity of panels corresponding to the X reference signal resources in the resource group corresponding to the panel information is equal to a quantity of panels indicated by the second parameter indicated by the panel information.

In a possible implementation, each resource group includes two reference signal resources. If the two reference signal resources in the resource group corresponding to the panel information correspond to different panels, the panel information further indicates whether the two panels corresponding to the two reference signal resources in the resource group corresponding to the panel information can be used for uplink multi-panel simultaneous transmission.

In a possible implementation, each resource group includes two reference signal resources, and the panel information further indicates whether panels or terminal receive beams corresponding to the two reference signal resources in the resource group corresponding to the panel information can be used for uplink multi-panel simultaneous transmission, uplink simultaneous transmission, or uplink multi-beam simultaneous transmission. Specifically, the panel information may be a 1-bit field. When the field is 0, it indicates that the panels or terminal receive beams corresponding to the two reference signal resources in the resource group corresponding to the panel information cannot be used for uplink multi-panel simultaneous transmission, uplink simultaneous transmission, or uplink multi-beam simultaneous transmission; and when the field is 1, it indicates that the panels or terminal receive beams corresponding to the two reference signal resources in the resource group corresponding to the panel information can be used for uplink multi-panel simultaneous transmission, uplink simultaneous transmission, or uplink multi-beam simultaneous transmission.

In a possible implementation, the communication unit is further configured to receive configuration information from the network device, where the configuration information indicates one or more of the following information: the X resource sets, a value of M, and a value of N.

When the communication apparatus 500 performs the function of the network device in the procedure shown in FIG. 4 in the foregoing embodiment:
the processing unit is configured to send reference signal resources in X resource sets to the terminal device, where the X resource sets are for determining M resource groups, X is an integer greater than 1, and M is an integer greater than 0; and each resource set includes at least M reference signal resources, each resource group includes X reference signal resources, and the X reference signal resources in each resource group belong to different resource sets in the X resource sets; and
the communication unit, configured to receive first indication information and second indication information from the terminal device, where the first indication information indicates the M resource groups, the second indication information includes panel information respectively corresponding to N of the M resource groups, and N is an integer less than or equal to M.

In a possible implementation, the second indication information includes N pieces of panel information, and each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

In a possible implementation, the panel information further indicates a resource group identifier of the resource group corresponding to the panel information.

In a possible implementation, the N resource groups are preset N resource groups of the M resource groups.

In a possible implementation, before the network device sends the reference signal resources in the X resource sets to the terminal device, the communication unit is further configured to receive L1 first parameters from the terminal device, where each first parameter indicates one maximum quantity of transmit ports, different first parameters indicate different maximum quantities of transmit ports, and L1 is an integer greater than 0.

In a possible implementation, the resource group corresponding to the panel information includes a first reference signal resource and a second reference signal resource, and the panel information includes at least one of the following information: first information, second information, and third information.

The first information indicates one of the L1 first parameters, and a maximum quantity of transmit ports indicated by the first parameter corresponding to the first information is a maximum quantity of transmit ports of a panel corresponding to the first reference signal resource.

The second information indicates one of the L1 first parameters, and a maximum quantity of transmit ports indicated by the first parameter corresponding to the second information is a maximum quantity of transmit ports of a panel corresponding to the second reference signal resource.

The third information indicates whether the panels corresponding to the X reference signal resources in the resource group corresponding to the panel information are the same.

In a possible implementation, the communication unit is further configured to receive L2 second parameters from the terminal device, where each second parameter indicates one or more maximum quantities of transmit ports, and L2 is an integer greater than 0.

In a possible implementation, the communication unit is further configured to send L2 second parameters to the terminal device, where each second parameter indicates one or more maximum quantities of transmit ports, L2 is an integer greater than 0, and the L2 second parameters are determined based on the L1 first parameters; and the L2 second parameters are determined based on the L1 first parameters.

If the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

In a possible implementation, X=2, the resource group corresponding to the panel information includes a first reference signal resource and a second reference signal resource, and the panel information indicates one of the L2 second parameters.

When the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, where the first reference signal resource and the second reference signal resource in the resource group corresponding to the panel information correspond to a same panel.

When the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, where the first reference signal resource and the second reference signal resource in the resource group corresponding to the panel information correspond to different panels.

In a possible implementation, each second parameter further indicates a quantity of panels corresponding to the one or more maximum quantities of transmit ports, and the method further includes:

The quantity of panels corresponding to the X reference signal resources in the resource group corresponding to the panel information is equal to a quantity of panels indicated by the second parameter indicated by the panel information.

In a possible implementation, each resource group includes two reference signal resources. If the two reference signal resources in the resource group corresponding to the panel information correspond to different panels, the panel information further indicates whether the two panels corresponding to the two reference signal resources in the resource group corresponding to the panel information can be used for uplink multi-panel simultaneous transmission.

In a possible implementation, each resource group includes two reference signal resources, and the panel information further indicates whether panels or terminal receive beams corresponding to the two reference signal resources in the resource group corresponding to the panel information can be used for uplink multi-panel simultaneous transmission, uplink simultaneous transmission, or uplink multi-beam simultaneous transmission. Specifically, the panel information may be a 1-bit field. When the field is 0, it indicates that the panels or terminal receive beams corresponding to the two reference signal resources in the resource group corresponding to the panel information cannot be used for uplink multi-panel simultaneous transmission, uplink simultaneous transmission, or uplink multi-beam simultaneous transmission; and when the field is 1, it indicates that the panels or terminal receive beams corresponding to the two reference signal resources in the resource group corresponding to the panel information can be used for uplink multi-panel simultaneous transmission, uplink simultaneous transmission, or uplink multi-beam simultaneous transmission.

In a possible implementation, the method further includes: The network device sends configuration information to the terminal device, where the configuration information indicates one or more of the following information: the X resource sets, a value of M, and a value of N.

The foregoing is merely an example. The processing unit 501 and the communication unit 502 may further perform other functions. For more detailed descriptions, refer to the related descriptions in the method embodiment shown in FIG. 4. Details are not described herein again.

FIG. 6 shows a communication apparatus 600 according to an embodiment of this application. The apparatus shown in FIG. 6 may be an implementation of a hardware circuit of the apparatus shown in FIG. 5. The communication apparatus is applicable to the foregoing flowcharts, and performs the function of the terminal device or the network device in the foregoing method embodiments. For ease of description, FIG. 6 shows only main components of the communication apparatus.

As shown in FIG. 6, the communication apparatus 600 includes a processor 610 and an interface circuit 620. The processor 610 and the interface circuit 620 are coupled to each other. It may be understood that the interface circuit 620 may be an interface circuit, a pin, an interface circuit, or an input/output interface. Optionally, the communication apparatus 600 may further include a memory 630, configured to: store instructions executed by the processor 610, store input data needed by the processor 610 to run instructions, or store data generated after the processor 610 runs instructions.

When the communication apparatus 600 is configured to implement the method shown in FIG. 4, the processor 610 is configured to implement the function of the processing unit 501, and the interface circuit 620 is configured to implement the function of the communication unit 502.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor or any regular processor.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An information transmission method, comprising:
measuring, by a terminal device, reference signal resources in X resource sets, to determine M resource groups, wherein X is an integer greater than 1, and M is an integer greater than 0; and each resource set comprises at least M reference signal resources, each resource group comprises X reference signal resources, and the X reference signal resources in each resource group belong to different resource sets in the X resource sets; and
sending, by the terminal device, first indication information and second indication information to a network device, wherein
the first indication information indicates the M resource groups, the second indication information comprises panel information respectively corresponding to N of the M resource groups, and N is an integer less than or equal to M.

2. The method according to claim 1, wherein each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

3. The method according to claim 1 or 2, wherein before the measuring, by a terminal device, reference signal resources in X resource sets, the method further comprises:
sending, by the terminal device, L1 first parameters to the network device, wherein each first parameter indicates one maximum quantity of transmit ports, different first parameters indicate different maximum quantities of transmit ports, and L1 is an integer greater than 0.

4. The method according to claim 3, wherein X=2, each resource group comprises a first reference signal resource and a second reference signal resource, and the panel information comprises at least one of the following information: first information, second information, and third information, wherein
the first information indicates one of the L1 first parameters, and a maximum quantity of transmit ports indicated by the first parameter corresponding to the first information is a maximum quantity of transmit ports of a panel corresponding to the first reference signal resource;
the second information indicates one of the L1 first parameters, and a maximum quantity of transmit ports indicated by the first parameter corresponding to the second information is a maximum quantity of transmit ports of a panel corresponding to the second reference signal resource; and
the third information indicates whether the panels corresponding to the X reference signal resources in the resource group corresponding to the panel information are the same.

5. The method according to claim 1 or 2, wherein the method further comprises:
sending, by the terminal device, L2 second parameters to the network device, wherein each second parameter indicates one or more maximum quantities of transmit ports, and L2 is an integer greater than 0; and
if the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

6. The method according to claim 3, wherein the method further comprises:
receiving, by the terminal device, L2 second parameters from the network device, wherein each second parameter indicates one or more maximum quantities of transmit ports, L2 is an integer greater than 0, and the L2 second parameters are determined based on the L1 first parameters; and
if the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

7. The method according to claim 5 or 6, wherein X=2, the resource group corresponding to the panel information comprises a first reference signal resource and a second reference signal resource, and the panel information indicates one of the L2 second parameters; and
when the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, wherein the first reference signal resource and the second reference signal resource in the resource group corresponding to the panel information correspond to a same panel; or
when the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, wherein the first reference signal resource and the second reference signal resource in the resource group corresponding to the panel information correspond to different panels.

8. The method according to claim 7, wherein each second parameter further indicates a quantity of panels corresponding to the one or more maximum quantities of transmit ports, and the method further comprises:
the quantity of panels corresponding to the X reference signal resources in the resource group corresponding to the panel information is equal to a quantity of panels indicated by the second parameter indicated by the panel information.

9. The method according to any one of claims 1 to 8, wherein the method further comprises:
receiving, by the terminal device, configuration information from the network device, wherein the configuration information indicates one or more of the following information:
the X resource sets, a value of M, and a value of N.

10. An information transmission method, comprising:
sending, by a network device, reference signal resources in X resource sets to a terminal device, wherein the X resource sets are for determining M resource groups, X is an integer greater than 1, and M is an integer greater than 0; and each resource set comprises at least M reference signal resources, each resource group comprises X reference signal resources, and the X reference signal resources in each resource group belong to different resource sets in the X resource sets; and
receiving, by the network device, first indication information and second indication information from the terminal device, wherein
the first indication information indicates the M resource groups, the second indication information comprises panel information respectively corresponding to N of the M resource groups, and N is an integer less than or equal to M.

11. The method according to claim 10, wherein the second indication information comprises N pieces of panel information, and each piece of panel information indicates at least one of the following information: a maximum quantity of transmit ports of a panel corresponding to each reference signal resource in a resource group corresponding to the panel information; information indicating whether panels corresponding to X reference signal resources in the resource group corresponding to the panel information are the same; and a quantity of panels corresponding to the X reference signal resources in the resource group corresponding to the panel information.

12. The method according to claim 10 or 11, wherein before the sending, by a network device, reference signal resources in X resource sets to a terminal device, the method further comprises:
receiving, by the network device, L1 first parameters from the terminal device, wherein each first parameter indicates one maximum quantity of transmit ports, different first parameters indicate different maximum quantities of transmit ports, and L1 is an integer greater than 0.

13. The method according to claim 12, wherein the resource group corresponding to the panel information comprises a first reference signal resource and a second reference signal resource, and the panel information comprises at least one of the following information: first information, second information, and third information, wherein
the first information indicates one of the L1 first parameters, and a maximum quantity of transmit ports indicated by the first parameter corresponding to the first information is a maximum quantity of transmit ports of a panel corresponding to the first reference signal resource;
the second information indicates one of the L1 first parameters, and a maximum quantity of transmit ports indicated by the first parameter corresponding to the second information is a maximum quantity of transmit ports of a panel corresponding to the second reference signal resource; and
the third information indicates whether the panels corresponding to the X reference signal resources in the resource group corresponding to the panel information are the same.

14. The method according to claim 10 or 11, wherein the method further comprises:
receiving, by the network device, L2 second parameters from the terminal device, wherein each second parameter indicates one or more maximum quantities of transmit ports, and L2 is an integer greater than 0.

15. The method according to claim 12, wherein the method further comprises:
sending, by the network device, L2 second parameters to the terminal device, wherein each second parameter indicates one or more maximum quantities of transmit ports, L2 is an integer greater than 0, and the L2 second parameters are determined based on the L1 first parameters; and
if the second parameter indicates one maximum quantity of transmit ports, the maximum quantity of transmit ports indicated by the second parameter corresponds to one panel of the terminal device; or if the second parameter indicates a plurality of maximum quantities of transmit ports, each maximum quantity of transmit ports indicated by the second parameter corresponds to one panel of the terminal device.

16. The method according to claim 14 or 15, wherein X=2, the resource group corresponding to the panel information comprises a first reference signal resource and a second reference signal resource, and the panel information indicates one of the L2 second parameters; and
when the second parameter indicated by the panel information indicates one maximum quantity of transmit ports, a maximum quantity of transmit ports of a panel corresponding to the first reference signal resource in the resource group corresponding to the panel information is equal to a maximum quantity of transmit ports of a panel corresponding to the second reference signal resource, and is equal to the maximum quantity of transmit ports indicated by the second parameter indicated by the panel information, wherein the first reference signal resource and the second reference signal resource in the resource group corresponding to the panel information correspond to a same panel; or
when the second parameter corresponding to the panel information indicates a plurality of maximum quantities of transmit ports, a maximum quantity of transmit ports of a panel corresponding to the first reference signal resource and a maximum quantity of transmit ports of a panel corresponding to the second reference signal resource are two maximum quantities of transmit ports in the plurality of maximum quantities of transmit ports, wherein the first reference signal resource and the second reference signal resource in the resource group corresponding to the panel information correspond to different panels.

17. The method according to claim 16, wherein each second parameter further indicates a quantity of panels corresponding to the one or more maximum quantities of transmit ports, and the method further comprises:
the quantity of panels corresponding to the X reference signal resources in the resource group corresponding to the panel information is equal to a quantity of panels indicated by the second parameter indicated by the panel information.

18. The method according to any one of claims 10 to 17, wherein the method further comprises:
sending, by the network device, configuration information to the terminal device, wherein the configuration information indicates one or more of the following information:
the X resource sets, a value of M, and a value of N.

19. The method according to any one of claims 1 to 18, wherein the panel information further indicates a resource group identifier of the resource group corresponding to the panel information.

20. The method according to any one of claims 1 to 18, wherein the N resource groups are preset N resource groups of the M resource groups.

21. The method according to any one of claims 1 to 20, wherein each resource group comprises two reference signal resources, and the panel information further indicates whether panels or terminal receive beams corresponding to the two reference signal resources in the resource group corresponding to the panel information can be used for uplink multi-panel simultaneous transmission, uplink simultaneous transmission, or uplink multi-beam simultaneous transmission.

22. A communication apparatus, wherein the communication apparatus comprises a transceiver unit and a processing unit, wherein
the transceiver unit is configured to perform sending and receiving operations in the method according to any one of claims 1 to 9 or sending and receiving operations in the method according to any one of claims 10 to 21; and
the processing unit is a processing module configured to perform a processing operation in the method according to any one of claims 1 to 9 or a processing operation in the method according to any one of claims 10 to 21.

23. A communication apparatus, comprising a processor and a memory, wherein
the memory is configured to store a computer program; and
the processor is configured to execute the computer program or computer instructions stored in the memory, to enable a communication device to perform the method according to any one of claims 1 to 9 or the method according to any one of claims 10 to 21.

24. A communication apparatus, wherein the communication apparatus comprises a processor, and the processor is configured to perform the method according to any one of claims 1 to 9 or the method according to any one of claims 10 to 21.

25. A non-volatile computer-readable storage medium, storing a computer program, wherein the computer program is loaded by a processor to perform the method according to any one of claims 1 to 21.
